Europäisches Patentamt

European Patent Office

Office européen des brevets

(11) Veröffentlichungsnummer : **0 391 331 B1**

(12) **EUROPÄISCHE PATENTSCHRIFT**

(45) Veröffentlichungstag der Patentschrift :
**04.03.92 Patentblatt 92/10**

(21) Anmeldenummer : **90106332.1**

(22) Anmeldetag : **03.04.90**

(51) Int. Cl.$^5$ : **B01J 19/24, C02F 3/12**

(54) **Reaktor für Gas-Flüssig-Reaktionen.**

(30) Priorität : **07.04.89 DE 3911342**

(43) Veröffentlichungstag der Anmeldung :
**10.10.90 Patentblatt 90/41**

(45) Bekanntmachung des Hinweises auf die
Patenterteilung :
**04.03.92 Patentblatt 92/10**

(84) Benannte Vertragsstaaten :
**AT BE CH DE ES FR LI NL**

(56) Entgegenhaltungen :
**DE-A- 2 638 428**
**GB-A- 2 177 618**
**US-A- 4 126 550**
**US-A- 4 871 516**

(73) Patentinhaber : **Linde Aktiengesellschaft**
**Abraham-Lincoln-Strasse 21**
**W-6200 Wiesbaden (DE)**

(72) Erfinder : **Schmidtke, Wolfgang**
**Packenreiterstrasse 16**
**W-8000 München 60 (DE)**

(74) Vertreter : **Schaefer, Gerhard, Dr.**
**Linde Aktiengesellschaft Zentrale**
**Patentabteilung**
**W-8023 Höllriegelskreuth (DE)**

Jouve, 18, rue Saint-Denis, 75001 PARIS

## Beschreibung

Die Erfindung betrifft einen Reaktor für Gas-Flüssig-Reaktionen mit zwei Reaktionszonen, die sowohl am Kopfende als auch am Fußende des Reaktors miteinander in Verbindung stehen.

Derartige Reaktoren sind als Schlaufenreaktoren bekannt und werden beispielsweise zur Wasseraufbereitung oder zur Herstellung chemischer Produkte mittels Gas-Flüssig-Reaktionen verwendet. Bei solchen Reaktoren kommt es insbesondere auf eine hohe Reaktionsleistung bei geringem Bauvolumen an.

Der vorliegenden Erfindung liegt die Aufgabe zugrunde, einen Reaktor der eingangs genannten Art so auszugestalten, daß eine hohe Reaktionsleistung bei geringen Reaktorabmessungen erreicht wird.

Diese Aufgabe wird erfindungsgemäß dadurch gelöst, daß in der ersten Reaktionszone nahe der oberen Verbindungsstelle der beiden Reaktionszonen eine Strahldüse zum Einleiten einer Flüssigkeit in die erste Reaktionszone angeordnet ist, im oberen Teil der zweiten Reaktionszone eine Gaszufuhrleitung angebracht ist, und am Fußende der zweiten Reaktionszone ein Abzugsbereich für behandelte Flüssigkeit angeschlossen ist.

Zweckmäßigerweise ist die erste Reaktionszone als Bypass-Leitung zur zweiten Reaktionszone ausgebildet. An der oberen Verbindungsstelle der Reaktionszonen ist ferner vorzugsweise eine Stauscheibe oder Drosselscheibe angebracht, über die das in zweite Reaktionszone eingeleitete Gas in die erste Reaktionszone übertreten kann. Außerdem ist vorteilhafterweise an der unteren Verbindungsstelle der Reaktionszonen ein Stromteiler angebracht, der nach oben gerichtete Austrittsöffnungen aufweist, so daß die Flüssigkeit bzw. das Gas am Fußende der ersten Reaktionszone gleichmäßig verteilt von der ersten Reaktionszone in die zweite Reaktionszone übertreten kann.

Beim Betrieb des Reaktors wird die Flüssigkeit über die Strahldüse in die erste Reaktionszone geleitet. Das vorzugsweise dem Kopfraum der zweiten Reaktionszone zugeführte Gas gelangt über die Drossel- oder Stauscheibe in den Strahldüsenbereich zur Verteilung und Einstellung einer diskontinuierlichen Phasengrenzfläche innerhalb der ersten Reaktionszone. Aufgrund der günstigen Phasenverteilung in der ersten Reaktionszone wird ein hoher Stoffaustausch erzielt. Die Strahldüse erzeugt einen Treibstrahl, der die Flüssigkeit bzw. das Gas durch die erste Reaktionszone hindurch zum Fußende der zweiten Reaktionszone befördert. Dort tritt das Gas bzw. die Flüssigkeit vorzugsweise mittels des Stromteilers gleichmäßig verteilt in die zweiten Reaktionszone über und strömt in dieser nach oben. Da die Flüssigkeit am Fußende der ersten Reaktionszone abgezogen wird, stellt sich innerhalb der zweiten Reaktionszone ein Gegenstrombereich ein, in dem es zu einer Auftrennung der Gas- und Flüssigphase kommt. Schließlich kann ein blasenfreier Flüssigkeitsstrom über den Abzugsbereich abgeführt werden.

Bei einer Steigerung der Flüssigkeitszufuhr über die Strahldüse und einem eventuellen höheren Austritt einer Restgasmenge über den Stromteiler in den Gegenstrombereich wird das Restgasvolumen dem Kopfraum der zweiten Reaktionszone zugeführt und entsprechend dem vorgenannten Ablauf wieder in den Strahldüsenbereich der ersten Reaktionszone zur weiteren Phasenverteilung eingetragen.

Bei dem erfindungsgemäßen Reaktor wird durch Optimierung der Flüssigkeits- und Gasstromführung eine gegenüber herkömmlichen Schlaufenreaktoren erheblich verbesserte Phasenverteilung erreicht. Dadurch ergibt sich ein hoher Stoffaustausch und eine große Reaktionsleistung bei geringer Reaktorgröße. Außerdem wird ein sicheres Einhalten bestimmter Betriebsparameter erleichtert. Da weitgehend handelsübliche Bauteile für den Reaktor verwendet werden können, ergeben sich geringe Herstellungskosten. Durch eine geringe Zahl von Bauteilen wird die Handhabung bei Montage, Betrieb und Reparatur erleichtert.

Der Reaktor eignet sich zur Durchführung aller denkbaren Gas-Flüssig-Reaktionen. Aufgrund des geringen Bauvolumens und der hohen Reaktionsleistung bietet er sich besonders als flexible Einheit zur Wasseraufbereitung bzw. pH-Regulierung von Trinkwasser bzw. Abwasser an. Da der Reaktor schnell am Einsatzort aufgebaut werden kann, eignet er sich auch zur Gewässersanierung. Nach Beendigung der Sanierung kann der Reaktor wieder leicht demontiert und zu einem anderen Einsatzort transportiert werden. Der Reaktor kann aber auch als statische Misch- und Dispergiereinheit für niederviskose Massenströme verwendet werden. Hier wäre beispielsweise der Eintrag von Gas zur Lösung oder Reaktion in Biomassen, Getränkesuspensionen, Serumkomponenten und Flüssigextrakten zu nennen.

Im folgenden soll die Erfindung anhand eines in einer Zeichnung schematisch dargestellten Ausführungsbeispiels naher erläutert werden.

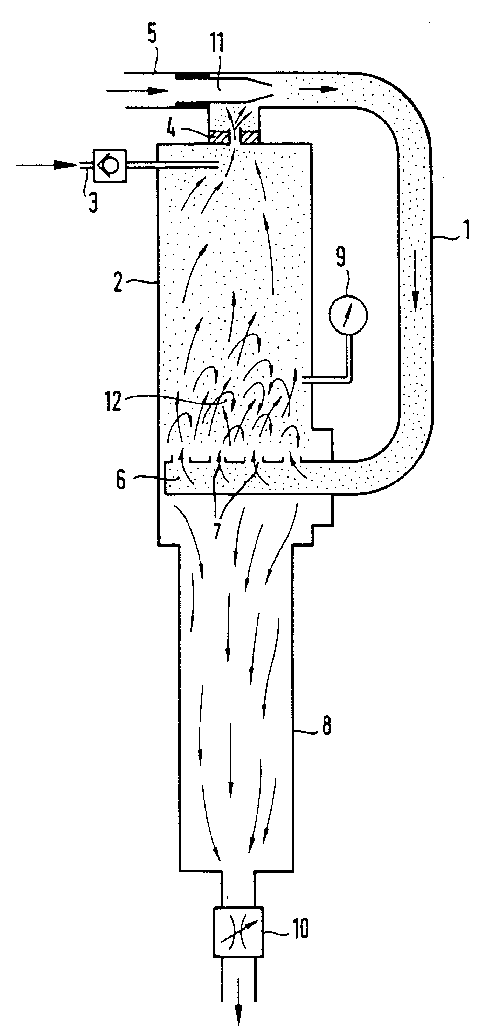

Die Figur zeigt einen Reaktor mit Bypass-Leitung im Querschnitt.

Der Reaktor weist eine als Bypass-Leitung ausgebildete erste Reaktionszone 1 und eine säulenförmige zweite Reaktionszone 2 auf. Die Bypass-Leitung 1 ist am Kopfende und am Fußende der Reaktionszone 2 mit dieser verbunden. Im oberen Teil der zweiten Reaktionszone 2 ist eine Gaszufuhrleitung 3 für das Reaktionsgas angebracht. Außerdem ist an der oberen Anschlußstelle der Bypass-Leitung 1 an die Reaktionszone 2 eine Stauscheibe 4 angeordnet, über die das Gas aus der Reaktionszone 2 in die Bypass-Leitung 1 übertreten kann.

In der Nähe der Stauscheibe 4 ist in der Bypass-Leitung 1 eine Strahldüse 11 angebracht, die über eine Flüssigkeitszuleitung 5 mit der Reaktionsflüssigkeit beaufschlagt werden kann. Die Bypass-Leitung 1 tritt am Fußende der Reaktionszone 2 in diese ein. Innerhalb der Reaktionszone 2 ist an der Bypass-Leitung 1 ein Stromteiler 6 angebracht, der nach oben gerichtete Austrittsöffnungen 7 für die Flüssigkeit bzw. das Gas aufweist.

Am Fußende der Reaktionszone 2 ist ein zylinderförmiger Abzugsbereich 8 für die Ableitung der behandelten Flüssigkeit angeflanscht. Über einen an der Reaktionszone 2 angeordneten Druckmesser 9 und einen im Ablaufbereich 8 angebrachten Druckregler 10 kann der Druck und die Strömungsgeschwindigkeit im Reaktor so gesteuert werden, daß eine günstige Phasenverteilung und somit ein hoher Stoffaustausch sichergestellt sind.

Im vorliegenden Ausführungsbeispiel wird der Reaktor zur pH-Regulierung von Abwasser verwendet. Einen pH-Wert von 8 - 14 aufweisendes Industrieabwasser wird über die Zuleitung 5 der Strahldüse 11 zugeführt. Außerdem wird $CO_2$-Gas über die Leitung 3 in die Reaktionszone 2 eingeleitet. Das Gas tritt über die Stauscheibe 4 in den Strahldüsenbereich der Bypass-Leitung 1 über. Innerhalb der Bypass-Leitung 1 führt eine gute diskontinuierliche Gasphaseneinstellung zu einem hohen Stoffaustausch. Aufgrund der Treibstrahlwirkung wird das Abwasser bzw. das Gas zum Stromteiler 6 befördert. Dort tritt das Abwasser bzw. das Gas durch die Austrittsöffnungen 7 nach oben in die Reaktionszone 2 ein. Da das behandelte Abwasser unterhalb des Stromteilers 6 nach unten abgeführt wird, stellt sich oberhalb des Stromteilers 6 ein Gegenstrombereich 12 ein, in dem das Abwasser vom Gas getrennt wird. Außerdem finden in diesem Gegenstrombereich 12 Nachreaktionen statt. Das behandelte Abwasser wird schließlich über den zylinderförmigen, an die Reaktionszone 2 unten angeflanschten Abzugsbereich 8 abgeleitet.

Durch Regelung der Abwasser- und/oder Gaszufuhr und/oder des Druckes im Reaktor werden eine günstige Phasenverteilung und somit ein hoher Stoffaustausch gewährleistet. Bei Steigerung der Abwasserzufuhr und einem eventuellen Austritt einer Restgasmenge über den Stromteiler 6 in den Gegenstrombereich 12 wird das Restgasvolumen dem Kopfraum der Reaktionszone 2 zugeführt und entsprechend dem vorgenannten Ablauf wieder über die Stauscheibe 4 in die Bypaß-Leitung 1 eingetragen.

Auf diese Weise können z.B. Abwässer, die einer weiteren Behandlung, z.B. einer biologischen Abbaustufe zugeführt werden, zuverlässig auf den für den biologischen Abbau zulässigen pH-Wert eingestellt werden.

## Patentansprüche

1. Schlaufenreaktor für Gas-Flüssig-Reaktionen mit zwei Reaktionszonen, die sowohl am Kopfende als auch Fußende des Reaktors miteinander in Verbindung stehen, dadurch gekennzeichnet, daß
– in der ersten Reaktionszone (1) in Nähe der oberen Verbindungsstelle der beiden Reaktionszonen (1,2) eine Strahldüse (11) zum Einleiten einer Flüssigkeit in die erste Reaktionszone (1) angeordnet ist,
– in der zweiten Reaktionszone (2) eine Gaszufuhrleitung (3) angebracht ist und
– am Fußende der zweiten Reaktionszone (2) ein Abzugsbereich (8) für behandelte Flüssigkeit angeschlossen ist.

2. Reaktor nach Anspruch 1, dadurch gekennzeichnet, daß die erste Reaktionszone (1) als Bypass-Leitung zur zweiten Reaktionszone (2) ausgebildet ist.

3. Reaktor nach Anspruch 1 oder 2, dadurch gekennzeichnet, daß an der oberen Verbindungsstelle der Reaktionszonen (1,2) eine Stau- oder Drosselscheibe (4) angebracht ist.

4. Reaktor nach einem der Ansprüche 1 bis 3, dadurch gekennzeichnet, daß an der unteren Verbindungsstelle der Reaktionszonen (1,2) ein Stromteiler (6) angebracht ist, der nach oben gerichtete Austrittsöffnungen (7) für die Flüssigkeit bzw. das Gas aufweist.

## Claims

1. A loop reactor for gas-liquid reactions comprising two reaction zones which are connected to one another both at the head end and at the base end of the reactor, characterised in that
– in the first reaction zone (1), in the vicinity of the upper connection point of the two reaction zones (1, 2) is arranged a jet nozzle (11) for the introduction of a liquid into the first reaction zone (1),
– a gas supply line (3) is arranged in the second reaction zone and
– a discharge zone (8) for treated liquid is connected at the base end of the second reaction zone (2).

2. A reactor as claimed in Claim 1, characterised in that the first reaction zone (1) is designed as a by-pass line to the second reaction zone (2).

3. A reactor as claimed in Claim 1 or 2, characterised in that a baffle plate or orifice plate (4) is arranged at the upper connection point of the reaction zones (1, 2).

4. A reactor as claimed in one of Claims 1 to 3, characterised in that a flow divider (6) is arranged at the lower connection point of the reaction zones (1, 2), which flow divider comprises upwardly directed outlet openings (7) for the liquid or gas.

**Revendications**

1. Réacteur en boucle, destiné à des réactions gaz-liquide, comportant deux zones de réaction reliées entre elles à l'extrémité de tête du réacteur ainsi qu'à l'extrémité de cuve du réacteur, caractérisé en ce que:
   – dans la première zone de réaction (1), est disposé, à proximité de l'emplacement de jonction supérieur des deux zones de réaction (1, 2), un éjecteur (11) destiné à introduire un liquide dans la première zone de réaction (1);
   – dans la seconde zone de réaction (2) est rapporté un conduit d'alimentation en gaz (3);
   – à l'extrémité de cuve de la seconde zone de réaction (2) est raccordée une zone de prélèvement (8) du liquide traité.

2. Réacteur selon la revendication 1, caractérisé en ce que la première zone de réaction (1) est réalisée sous la forme d'un conduit de dérivation de la seconde zone de réaction (2).

3. Réacteur selon la revendication 1 ou 2, caractérisé en ce qu'à l'emplacement de jonction supérieur des zones de réaction (1, 2), est monté un disque réducteur de pression (4) ou un disque d'étranglement (4).

4. Réacteur selon l'une des revendications 1 à 3, caractérisé en ce qu'à l'emplacement de jonction inférieur des zones de réaction (1, 2), est rapporté un répartiteur de courant (6) qui comporte des orifices de sortie (7) dirigés vers le haut, pour le liquide ou le gaz.